# EUROPEAN PATENT APPLICATION

(11) **EP 1 463 184 A2**
(43) Date of publication of application: **29.09.2004**
(21) Application number: 04075758.5
(22) Date of filing: 09.03.2004
(51) Int. Cl.: H02K 15/00, H02K 1/16, H02K 3/50

(54) **Manufacturing method of inserting hairpin conductors in a core having deformabletooth tips**

(30) Priority: 25.03.2003 US 396940
(71) Applicant: Delphi Technologies, Inc., Troy, MI 48007 (US)
(72) Inventor: Bradfield, Michael Duane, Anderson, IN 46013 (US)
(74) Representative: Denton, Michael John

(57) **Abstract**

A stator core (10) extends along a longitudinal axis (26) and includes a yoke (12), and a plurality of radially-inwardly projecting teeth (14) separated by intervening slots (16). Each tooth (14) includes a tooth tip (36) at the radially innermost portion of each tooth (14), thereby defining a slot opening (22). A conductor segment (44) including two segment ends (46,48), a pair of straight portions (50,52), and a hairpin-shaped end turn (47) disposed therebetween is radially inserted into at least two slots (16₁,16₂) through corresponding slot openings (22), wherein the straight portions (50,52) of the conductor segment (44) each have a width substantially equal to the width of the slot (16). After the conductor segment is inserted into the stator core (10), the tooth tips (36,38,40) are deformed so as to reduce the size of the slot opening (22), thereby providing for an improved magnetic flux path and slot fill percentage without increasing the cost of manufacturing, or decreasing the reliability of the final product.

## Description

### Technical Field

The present invention relates to a stator core of a dynamoelectric machine such as a generator.

### Background of the Invention

Generators are found in virtually every motor vehicle manufactured today. These generators, also referred to as alternators, produce electricity necessary to power a vehicle's electrical accessories and charge a vehicle's battery. Generators must produce electricity in sufficient quantities to power a vehicle's electrical system. Furthermore, generators must produce electricity having the characteristics necessary to be compatible with a vehicle's electrical components. A generator typically includes a stator assembly comprising a stator core and a stator winding, and a rotor.

Conventionally, the stator core contains the main current carrying windings ("stator windings") in which electromotive force produced by magnetic flux is induced. The core contains a plurality of radially-inwardly projecting teeth separated by intervening slots. Each slot has an open end formed by tooth tips of adjacent stator teeth. The slot opening is conventionally relatively narrow, compared with the width of the slot itself. The narrow slot opening in conventional arrangements, however, is not an accident, but rather a deliberate choice, ostensibly to provide both a magnetic flux path and to provide for wire retention.

There are two basic ways in which conventional stator windings are manufactured. In the first instance, a continuous magnetic wire is wound into a wave or looped pattern and then pulled into the stator core in primarily a radial direction. In the second instance, a number of hairpin-shaped conductor segments (i.e., including at least one "hairpin" or 180° end turn) are inserted axially into the stator core. After insertion, the two segment ends of the hairpin-shaped conductor segments extending out from the slots must be formed into a correct position and shape and then welded to the segment ends of adjacent conductor segments in order to form a continuous stator winding. There are, however, shortcomings with conventional arrangements.

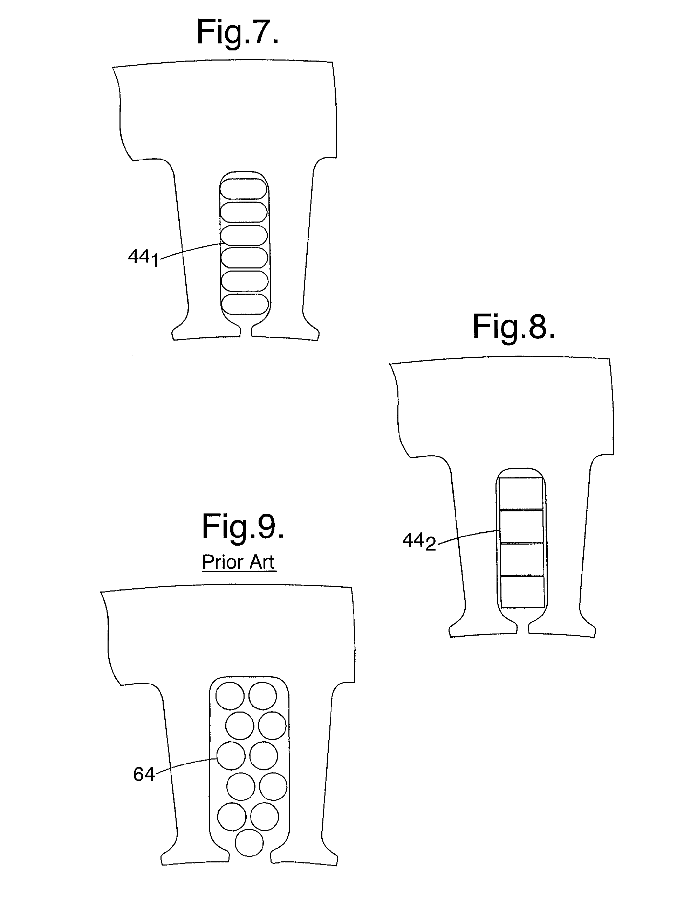

The first shortcoming relates to a so-called "slot fill" factor, typically expressed as a percentage. Particularly, the "slot fill" is a percentage of the total cross-sectional area of stator windings, taken relative to the total available cross-sectional area in the slot. The relatively narrow slot opening formed by the tooth tips, which are typically stamped directly into a steel lamination into the desired profile, restricts entry (and accordingly the size) of the stator windings used in the generator. A typical stator size and fill configuration is shown in Figure 9. Accordingly, obtaining an increased stator slot fill is difficult to achieve. Due to this manufacturing constraint, the slot fill is typically in the range of 50% of the net available slot space for a Lundell type generator. This constraint limits both the output power of the generator, as well as its efficiency for a given package size.

One approach taken in the art to improve the "slot fill" of a generator is to use stator windings made up of hairpin-shaped conductor segments as discussed above. In this approach, pre-formed conductor segments are inserted axially into the stator slots throughout the iron core of the stator. The multiple segment ends of these hairpin-shaped conductor segments are then joined to create a continuous conductive loop in the stator. Since the conductor segments are inserted in an axial fashion, such hairpin-shaped conductor segments are not limited by such small slot openings known in the art. Consequently, the hairpin-shaped conductor segments can be of a larger cross-sectional area, and also be non-round in shape. With such a size and shape, it is possible to neatly stack the windings within the slot to increase the slot fill, which may approach 90%.

However, such an approach is not without its downfalls. For instance, because the hairpin-shaped conductor segements are inserted in an axial direction, the segment ends must be straight in order to be inserted into the appropriate stator slot and slid through the entire axial length of the core. In order to electrically connect the segment ends with respective segment ends of adjacent hairpin-shaped conductor segments, the segment ends must be formed into position after insertion into the stator core. This results in significant cost increases due to increased labor and post-insertion forming, increased complexity and scrap rate, as well as decreased reliability.

Another approach in the art involves deforming the tooth tips after inserting the hairpin-shaped conductor segments, as seen by reference to U.S. Patent No. 4,176,444 entitled "METHOD AND APPARATUS FOR ASSEMBLING DYNAMOELECTRIC MACHINE STATORS" issued to Walker. Walker discloses a method for forming a stator including the steps of enlarging a slot opening between adjacent pairs of stator teeth by deforming the stator tooth tips (*e.g.*, with a punch), placing prewound stator windings in selected core slots and thereafter reducing the slot opening between those certain adjacent pairs of teeth by reforming the tooth tips so as to provide a cylindrical shaped central bore stator. The disclosure of Walker, however, does not teach using a conductor having a width substantially equal to that of the slot itself.

Thus, in sum, it would be desirable to keep the "tooth tips" since they can improve low speed performance of the generator, among other things. However, the small slot opening which results from the "tooth tips" restricts the size of the stator windings, resulting in a low slot-fill stator having a reduced power output and a reduced efficiency. Additionally, it would be advantageous to utilize hairpin-shaped conductor segments in an effort to improve slot fill, however, the axial insertion of these conductor segments requires that the segment ends be straight, thereby increasing the complexity and cost associated with electrically connecting the segment ends of adjacent conductor segments, as well as reducing reliability.

There is, therefore, a need to provide a method of making a dynamoelectric machine that minimizes or eliminates one or more of the problems set forth above.

### Summary of the Invention

One object of the present invention is to provide a stator core for a dynamoelectric machine, such as an alternating current (AC) generator, that solves one or more of the problems set forth above. The present invention provides a method that, during an initial step, provides a slot opening that is increased in width relative to conventional slot openings (*i.e.*, approximately equal to the width of the slot itself). The increased size slot openings allow hairpin-shaped conductor segments having pre-insertion formed segment ends and a pair of straight portions, each with a width about equal to the slot width, to be *radially* inserted (in a subsequent step) into the slots through the slot openings to thereby provide an increased slot fill and reliability, as well as a reduction in complexity and costs. Thereafter, in a subsequent step, the segment ends of adjacent conductor segments are electrically connected in order to create a continuous stator winding. In a further subsequent step, the slot openings are closed up in order to provide an improved magnetic flux path and for winding retention. This is accomplished, in one embodiment, by cold-forming the ends of the stator teeth to form "tooth tips" after the core itself has been made and wound with the conductor segments. The invention also provides another advantage, namely that of keeping the "tooth tips," which improve performance, particularly at low speed.

A method according to the present invention thus involves providing a stator winding made up of a number of electrically connected conductor segments having a pair of straight portions with a hairpin-shaped end turn therebetween, and respective segment ends. Each straight portion has a width substantially equal to the slot width. The method further includes a deforming step that closes down the slot opening after the conductor segments are inserted. The method involves three basic steps. First, providing a stator core having a main axis, and including a plurality of teeth separated by intervening slots wherein each tooth includes unformed tooth tips that define a slot opening. Next, inserting one or more of the above-described hairpin-shaped conductor segments in a radially-outwardly direction from the central bore area of the stator core through the slot openings and into at least two (2) of the slots, wherein each of the straight portions of the hairpin-shaped conductor segment has a width (*e.g.*, a diameter for a round shape) substantially equal to the slot width. Finally, deforming the unformed tooth tips so as to reduce the slot opening width. The invention improves slot fill percentage without increasing the complexity or cost of the manufacturing operation, with no increase in scrap rate, nor any decrease in reliability of the final product.

Other features and advantages will be apparent to those of ordinary skill in the art from the detailed description and accompanying drawings describing and illustrating the invention by way of example only and not by way of limitation.

### Brief Description of the Drawings

The operative features of the present invention are explained in more detail with reference to the drawings.
Figure 1 is a front perspective view of a conventional stator core.
Figure 2 is a partial plan view of a stator core suitable for use in the present invention.
Figure 3 is a partial perspective view of a stator core showing a hairpin-shaped conductor segment associated therewith.
Figures 4-6 are simplified plan views of a pair of adjacent stator teeth illustrating the progression of deforming the tooth tips of the stator teeth.
Figure 7-9 are simplified cross-sectional views of a stator showing alternate round, square, and rectangular winding wire shapes, respectively.

### Description of Preferred Embodiment

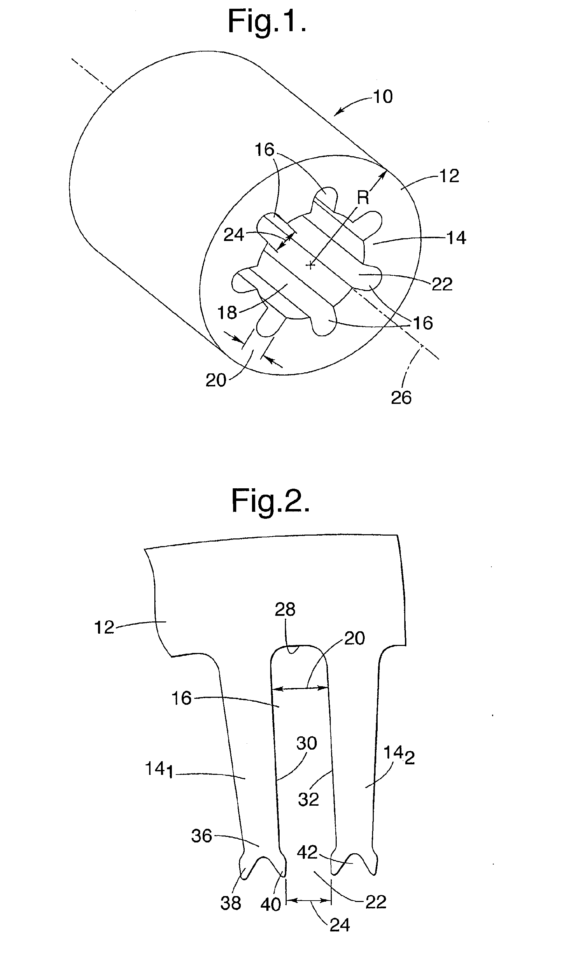

Referring now to the drawings wherein like reference numerals are used to identify identical components in the various views, Figure 1 is a front perspective view of a stator core 10 suitable for use in accordance with the present invention. Core 10, as shown, includes yoke 12, a plurality of teeth 14, and a plurality of intervening slots 16. Each of teeth 14 project radially-inwardly, thereby defining a central bore 18. Each slot 16 has a nominal slot width 20, and a slot opening 22 having a width 24. The stator core 10 shown in Figure 1 is that produced after a first stage of manufacturing, but prior to insertion of stator windings, and a cold-forming operation to form tooth tips, to be described in detail below.

With continued reference to Figure 1, stator core 10 is generally cylindrical having a main longitudinal axis 26, and an outside diameter of radius R, also as shown. Core 10 is suitable for use in a stator assembly for a dynamoelectric machine, such as an AC generator for an automotive vehicle, for example, for a Lundell type generator (*i.e.*, an AC generator having claw-shaped rotor poles, the stator windings being wound in a multiphase configuration, such as a three phase configuration, and connected to a rectifier to produce a DC output). In a preferred embodiment, a plurality of relatively thin, generally circular laminations are stamped or otherwise formed from suitable magnetic material (*e.g*., silicon steel or the like), and are then adhered together in a stack having a predesired axial length, as understood generally by one of ordinary skill in the art. In a first preferred embodiment, the stator core 10 may be of the type having 72 slots. In a second preferred embodiment, the stator core 10 may be of the type having 36 slots.

Figure 2 is a partial view of a stator core suitable for use in the present invention. Each slot 16 is formed by adjacent teeth, shown in Figure 2 as adjacent teeth 14₁ and 14₂. Slot 16 is configured to receive stator windings of a type that have a width that is substantially equal to the slot width 20.

Slot 16 includes a closed end 28 adjacent to yoke 12 and a pair of sides 30 and 32 defined by adjacent teeth 14₁ and 14₂ (in addition to an open end defining slot opening 22 described in connection with Figure 1). In the illustrated embodiment, sides 30 and 32 are generally parallel over the radial extent of teeth 14₁ and 14₂.

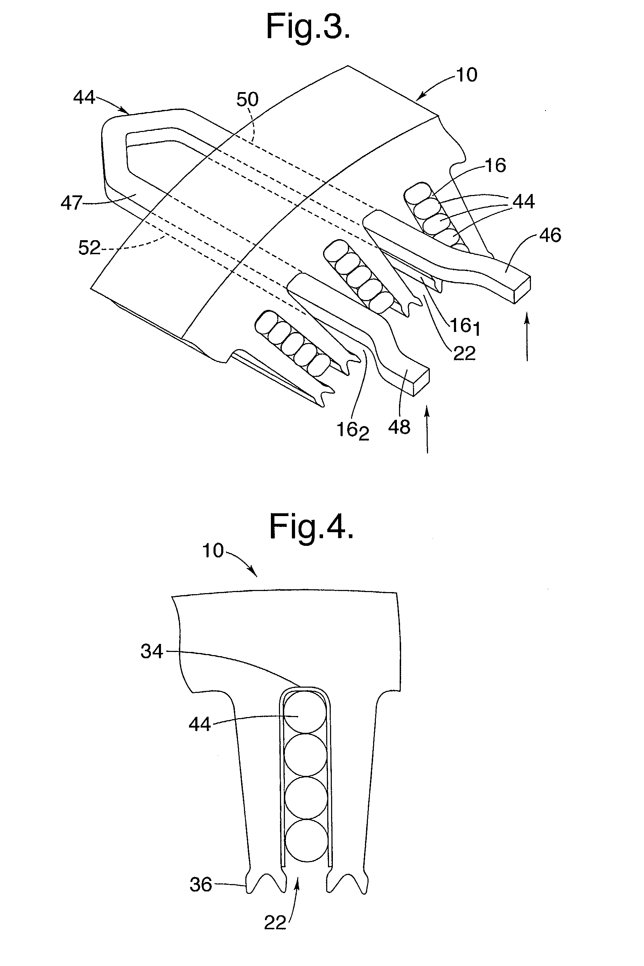

The depth of slot 16 may be selected to accept a plurality of stacked layers of individual stator winding conductors, as shown in Figure 3 for example. The slot opening width 24 was about 0.1005 inches and the slot width 20 was about of 0.1205 inches. This difference of about 0.0200 inches in width allows for the insertion of an insulating slot liner 34, best shown in Figures 4-6. These dimensions are, of course, exemplary only, and not limiting in nature. Thus, the stator slot opening width 24 is substantially equal to the width of one wire plus a suitable clearance between the wire and the slot liner 34. It should therefore be understood from the foregoing that the width of the stator winding, the slot opening width 24 and the slot width 20 need not each be of the identical dimension. In a constructed embodiment, for example, the slot opening 22 was about 83% of the slot width 20 (0.1005/.1205), substantially equal for purposes of this invention. Of course, the slot liner 34 may be omitted, thereby allowing a much closer correspondence in size between the wire width, the opening width 24, and the slot width 20 itself. In general, it should be understood that the slot opening and the wire width will be closer numerically to each other with respect to the slot width, in the case where a slot liner is used.

The increased slot opening 22 is achieved by producing (*e.g.*, stamping) the profile shown in Figure 2, and deferring final formation of the small gap "tooth tips" until after the core 10 itself has been made (adhering laminations together) and hairpin-shaped conductor segments have been radially inserted according to the invention. To facilitate the step of forming the tooth tips, a variety of features are initially formed on a radially innermost portion of the plurality of teeth 14 (herein designated generally "first tips" 36 in Figure 2). In particular, each tooth 14 includes (i) a pair of legs 38 and 40; (ii) a recess 42 disposed therebetween and formed, in part, by the inner sides of legs 38 and 40.

Figures 2-6 show the progression of a method of manufacturing a dynamoelectric machine according to the invention, which combines the insertion of a hairpin-shaped conductor segment with two one-slot wide straight portions and pre-insertion formed segment ends, and a deforming operation.

Figure 2 shows the first step of the inventive method, namely, providing a stator core 10 having a main axis 26 (best shown in Figure 1) including a yoke 12 and a plurality of radially-inwardly proj ecting teeth 14 separated by intervening slots 16 wherein a radially innermost portion of teeth 14₁ and 14₂ each include a pair of legs 38 and 40, with a recess 42 disposed between the legs. Legs on adjacent teeth define a plurality of slot openings 22 each having a first width 24.

Figure 3 show the next step of the inventive method, namely, inserting hairpin-shaped conductor segments 44 in a radially-outwardly direction from central bore 18 (best shown in Figure 1) through the slot openings 22 and into the slots 16. Hairpin-shaped conductor segment 44 includes a first segment end 46 and a second segment end 48, each of which are formed into a predetermined shape and location prior to insertion into slots 16. Pre-forming segment ends 46 and 48 allows for the simplified electrical connection between respective first and second segment ends of adjacent hairpin-shaped conductor segments. Hairpin-shaped conductor segment 44 further includes a hairpin-shaped end turn 47 intermediate the two segment ends 46,48, as well as a pair of straight portions 50 and 52, wherein each straight portion 50, 52 has a width substantially equal to that of slot width 20.

With continued reference to Figure 3, upon insertion into a first slot 16₁, first segment end 46 extends axially from outside slot 16₁ and on into slot 16₁, becoming first straight portion 50 extending axially along the entire length of slot 16₁. Upon reaching the end of slot 16₁ that is opposite first segment end 46, conductor segment 44 bends away from slot 16₁ and extends circumferentially around stator core 10 for any number of slots, thereby defining the hairpin-shaped end turn 47. Hairpin-shaped conductor segment 44 then bends toward and into a second slot 16₂, and becomes second straight portion 52 that extends axially for the entire length of slot 16₂, until it reaches the end of slot 16₂, and becomes second segment end 48 protruding out from slot 16₂ and away from stator core 10. It should be noted that the number of slots that hairpin-shaped conductor segment 44 spans in between first straight portion 50 and second straight portion 52 may vary depending upon the number of slots 16 with which stator core 10 is constructed, and whether the stator is of the full pitch or fractional pitch type. For instance, if stator core 10 is formed with 72 slots, hairpin-shaped conductor segment 44 may span six (6) slots. If, however, stator core 10 is formed with 36 slots, hairpin-shaped conductor segment 44 may span three (3) slots. Of course it should be clearly understood that these two configurations of stator core 10 are meant only to be exemplary and not limiting in nature.

This insertion step can then be repeated a preselected number of times so that all of the slots 16 are occupied by a hairpin-shaped conductor segment 44. Once the desired number of hairpin-shaped conductor segments are inserted into stator core 10, the respective first and second segment ends 46 and 48 of adjacent inserted conductor segments 44 are then connected, as known for axially-inserted hairpin conductor segments, thereby creating a continuous stator winding.

The method may include the further step of inserting a stator slot liner (insulator) 34 in slot 16 (Figures 4-6). Alternatively, the slot liner 34 can be omitted and a powder coat of insulating material can be used in lieu thereof. The hairpin-shaped conductor segment 44 would be inserted after the slot liner 34, if used.

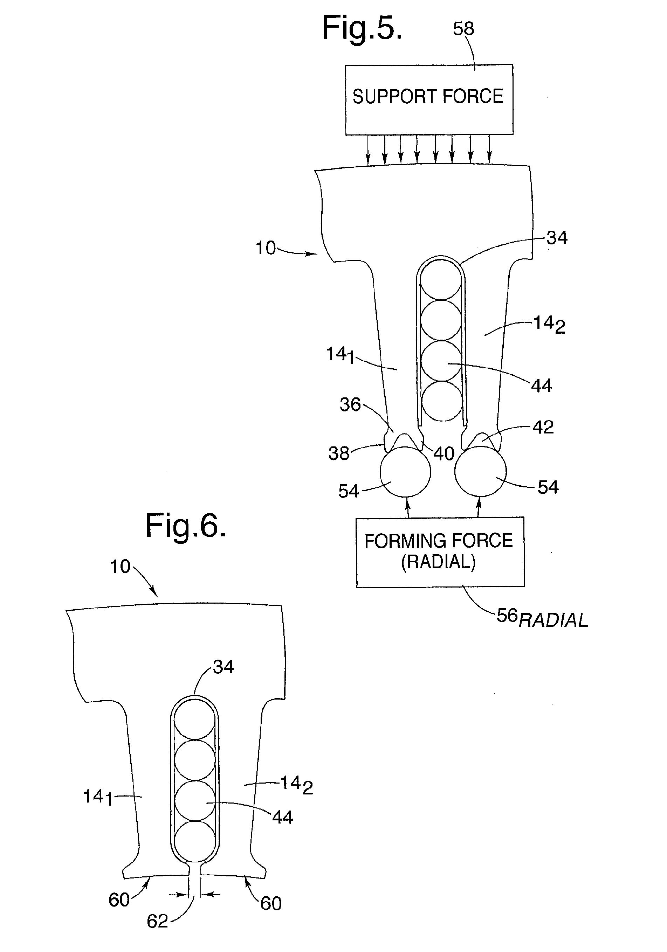

Figure 5 shows the next stage, particularly, the beginning of a cold-forming operation on the radially innermost ends of teeth 14₁ and 14₂ to form the final tooth tips. Figure 5 shows a suitably configured forming tool (*e.g.*, a ball with a size selected to effect the desired radius, and arranged in a ball roller configuration 54). Ball roller 54 is shown disposed against legs 38 and 40 of teeth 14. Figure 5 also shows the radial forces, designated 56_{RADIAL} that are applied during the cold-forming operation. A support force, designated support force 58, is employed such as by providing a reaction surface or in other known ways.

The ball roller 54 may be rolled along the bottom of tooth 14 (*i.e.*, the inside diameter of the stator core 10) in an axial direction. This movement deforms the material at the bottom *(i.e.,* radially innermost) of tooth 14 to define a final "tooth tip" 60 (shown in Figure 6).

Figure 6 illustrates the final or completed stage where the final tooth tip 60 is newly formed on a radially innermost portion of each tooth 14. As a result of the cold-forming operation, a second slot opening width 62 is established that is smaller than the first slot opening width 24 shown in Figure 2. The closed up slot width 62 provides an improved magnetic flux path, and further functions to retain the hairpin-shaped conductor segments 44. The tooth tips are particularly important at low rotational speeds, such as may be experienced during idle or slightly faster than idle conditions in an automotive vehicle (*e.g*., 1600 rpm). In one configuration, the tooth tips improved the output amps of an alternator having normally "straight sided" stator teeth, such as shown by example only in my U.S. Patent No. 6,278,213 issued to Bradfield entitled "HIGH FILL STATOR DESIGN," hereby incorporated by reference.

It should also be understood that shapes other than round-shaped wires may be used for hairpin-shaped conductor segments 44, and remain within the spirit and scope of the present invention.

Figure 7, for example, shows the present invention employing a rectangular shaped conductor segment 44₁.

Figure 8, for a further example, shows the present invention employing a square shaped conductor segment 44₂.

Figure 9 is a simplified cross-sectional view showing a conventional stator arrangement, with a relatively small diameter stator winding 64, relative to the width of the stator slot. This prior art configuration, as described in the Background, results in a relatively low slot fill percentage, which reduces the power output and efficiency of the generator.

In accordance with the invention, an enlarged stator slot opening is combined with an enlarged diameter hairpin-shaped conductor segment (*viz.*, substantially equal to the width of the stator slot), with pre-insertion formed segment ends. The hairpin-shaped conductor segment is inserted in a radially-outwardly direction starting from the central bore through the slot openings and into the slots, and then the tooth tips are cold-formed on the radially-innermost ends of the stator teeth. The features of the invention allow the enlarged hairpin-shaped conductor segment to be inserted radially through an increased-size slot opening compared to the slot openings found in conventional arrangements. The use of hairpin-shaped conductor segments with pre-insertion formed segment ends not only allows for reduced complexity and cost as compared to the conventional straight end hairpin-shaped conductor segment method discussed above, but because these conductor segments can be radially inserted, this invention allows for higher slot fill as well as increased generator output and efficiency afforded by the post winding cold forming process. The closed-up slot opening, which is now reduced in width (akin to a conventional slot opening), provides an improved magnetic flux path and performance (particularly at low speed), and further provides a wire retention function.

## Claims

1. A method for making a dynamoelectric machine comprising the steps of:
providing a stator core (10) having a main axis (26) and including a plurality of teeth (14) projecting radially inwardly to define a central bore (18), said plurality of teeth (14) being separated by intervening slots (16), wherein each of said plurality of teeth (14) includes an unformed tooth tip (36) that defines a slot opening (22);
inserting at least one hairpin-shaped conductor segment (44) with a first and second segment (46, 48) end in a radially-outwardly direction from the central bore (18) into at least a first and second ones of said plurality of slots (16) through corresponding slot openings (22), said inserted conductor segment (44) having a first and second straight portion (50, 52), each having width substantially equal to that of said slot (16).
deforming said unformed tooth tips (36) so as to reduce said slot opening (22).

2. The method of claim 1 further comprising the step of forming said first and second segment ends (46, 48) in a given manner prior to inserting said conductor segment (44) into said slots (16).

3. The method of claim 1 further comprising the step of selecting one of a round, square (44₂), or rectangular (44₁) shaped conductor for said hairpin-shaped conductor segment (44).

4. The method of claim 1 further comprising the steps of:
repeating said providing and inserting steps a preselected number of times so that all of said slots (16) are occupied by said hairpin-shaped conductor segments (44); and
connecting respective first and second segment ends (46, 48) of the inserted adjacent hairpin-shaped conductor segments (44) to form a continuous stator winding.

5. The method of claim 1 wherein the inserting step further includes:
inserting a hairpin-shaped conductor segment (44) wherein said first segment end (46) projects from outside said stator core (10) into one of said slots (16₁), becoming said first straight portion (50) extending axially along the entire length of said slot (16₁), then extending axially outwardly from said slot (16₁), then bending and extending circumferentially along the circumference of said stator core (10), spanning any number of slots (16₁), thereby defining an end turn (47), then bending again and extending into a second of said plurality of slots (16₁), becoming said second straight portion (52) extending axially along the entire length of said second slot (16₂), then extending axially outwardly and away from said second slot (16₂) and forming said second segment end (48).

6. The method of claim 1 further comprising the step of forming said hairpin-shaped conductor segment (44) so as to span a number of slots n when said stator core (10) has 36 of said slots (16), wherein n is an integer greater than or equal to 3.

7. The method of claim 1 further comprising the step of forming said hairpin-shaped conductor segment (44) so as to span a number of slots n when said stator core (10) has 72 of said slots (16), wherein n is an integer greater than or to equal 6.

8. The method of claim 1 wherein the deforming step further includes the substep of cold working the radially innermost portion of said tooth tips (36).

9. The method of claim 1 further comprising the step of inserting a slot liner (34) in each of said slots (16) wherein a combined width of each of said first and second straight portions (50, 52) and said slot liner (34) is substantially equal to the slot width (20).

10. A method of making a dynamoelectric machine comprising the steps of:
providing a stator core (10) having a main axis (26) and including a yoke (12) and a plurality of teeth (14) projecting radially inwardly away from said yoke (12) to define a central bore (18), wherein each of said teeth (14) includes a tooth tip (36) having a radially innermost portion and including a pair of legs (38, 40) with a recess (42) disposed therebetween;
providing a plurality of slots (16) formed between two of said plurality of teeth (14), each slot (16) extending axially for the entire length of said stator core (10), and wherein each slot includes two sides (30, 32) , an open end (22) located between the tooth tips (36) of consecutive teeth (14), and a closed end (28) adjacent to said yoke (12);
providing a hairpin-shaped conductor segment (44) with a first and second segment end (46, 48) and a first and second straight portion (50, 52) wherein each of said straight portions (50, 52) has a width substantially equal to that of said slots (16);
forming said first and second segment ends (46, 48) of said hairpin-shaped conductor segment (44) prior to inserting said winding into said slots (16);
inserting at least one of said hairpin-shaped conductor segments (44) in a radially-outwardly direction from said central bore (18) into at least a first and second ones of said plurality of slots (16₁, 16₂) through corresponding slot openings (22);
repeating said providing and inserting steps a preselected number of times so that all of said slots (16) are occupied by said hairpin-shaped conductor segments (44);
connecting respective first and second segment ends (46, 48) of the inserted adjacent hairpin-shaped conductor segments (44) to form a complete single continuous stator winding,
deforming said tooth tips (36) so as to reduce the width of said slot opening (22) .

11. The method of claim 10 further comprising the step of selecting one of a round, square (44₂), or rectangular (44₁) shaped conductor for said hairpin-shaped conductor segment (44).

12. The method of claim 10 wherein the inserting step further comprises the substep of:
inserting a hairpin-shaped conductor segment (44) wherein said first segment end (46) projects from outside said stator core (10) into one of said slots (16), becoming said first straight portion (50) extending axially along the entire length of said slot (16₁), then extending axially outwardly from said slot (16₁), then bending and extending circumferentially along the circumference of said stator core (10), spanning any number of slots (16₁, 16₂), thereby defining an end turn (47), then bending again and extending into a second of said plurality of slots (16₁, 16₂), becoming said second straight portion (52) extending axially along the entire length of said second slot (16₂), then extending axially outwardly and away from said second slot (16₂) and forming said second segment end (48).

13. The method of claim 10 further comprising the step of forming said hairpin-shaped conductor segment (44) so as to span a number of slots n when said stator core (10) has 36 of said slots (16), wherein n is an integer greater than or equal to 3.

14. The method of claim 10 further comprising the step of forming said hairpin-shaped conductor segment (44) so as to span a number of slots n when said stator core (10) has 72 of said slots (16), wherein n is an integer greater than or equal to 6.

15. The method of claim 10 wherein the deforming step includes the substep of cold working said tooth tips (36) so as to deform the legs laterally toward adjacent slots (16).

16. The method of claim 10 further comprising the step of inserting a slot liner (34) in each slot (16) wherein a combined width of each of said straight portions (50, 52) and said slot liner (34) is substantially equal to the width of said slot (20).
